# EUROPÄISCHE PATENTSCHRIFT

(11) **EP 3 639 525 B1**
(45) Veröffentlichungstag und Bekanntmachung des Hinweises auf die Patenterteilung: **09.09.2020**
(21) Anmeldenummer: 18730329.2
(22) Anmeldetag: 07.06.2018
(51) Int. Cl.: H04R 1/40, H04R 3/00, B60R 11/02, B60R 11/00

(54) **MIKROFONSYSTEM FÜR EIN KRAFTFAHRZEUG MIT RICHTCHARAKTERISTIK UND SIGNALVERBESSERUNG**
MICROPHONE SYSTEM FOR A MOTOR VEHICLE HAVING A DIRECTIVITY PATTERN AND SIGNAL IMPROVEMENT
SYSTÈME DE MICROPHONE POUR UN VÉHICULE À MOTEUR À CARACTÉRISTIQUE DIRECTIONNELLE ET À AMÉLIORATION DU SIGNAL

(30) Priorität: 31.08.2017 DE 102017215219
(43) Veröffentlichungstag der Anmeldung: 22.04.2020
(73) Patentinhaber: Audi AG, 85045 Ingolstadt (DE)
(72) Erfinder: PERL, Martin, 85055 Ingolstadt (DE)
(74) Vertreter: Brandt, Kai
(86) Internationale Anmeldenummer: PCT/EP2018/064945
(87) Internationale Veröffentlichungsnummer: WO 2019/042606

(56) Entgegenhaltungen:
- DE-A1-102010 034 237
- DE-A1-102014 013 919
- DE-A1-102015 220 400
- DMOCHOWSKI J ET AL: "Combined Beamforming and Noise Cancellation", INSTRUMENTATION AND MEASUREMENT TECHNOLOGY CONFERENCE, 2005. IMTC 2005 . PROCEEDINGS OF THE IEEE OTTAWA, ON, CANADA 16-19 MAY 2005, PISCATAWAY, NJ, USA,IEEE, Bd. 2, 16. Mai 2005 (2005-05-16), Seiten 1033-1037, XP010900579, DOI: 10.1109/IMTC.2005.1604297 ISBN: 978-0-7803-8879-6
- RAKESH POGULA ET AL: "Performance evaluation of beamforming techniques for speech enhancement", 2017 FOURTH INTERNATIONAL CONFERENCE ON SIGNAL PROCESSING, COMMUNICATION AND NETWORKING (ICSCN), IEEE, 16. März 2017 (2017-03-16), Seiten 1-5, XP033241406, DOI: 10.1109/ICSCN.2017.8085647 [gefunden am 2017-10-26]

## Beschreibung

Die Erfindung betrifft ein Mikrofonsystem für ein Kraftfahrzeug nach dem Oberbegriff von Patentanspruch 1 sowie ein Kraftfahrzeug mit einem solchen Mikrofonsystem. Des Weiteren betrifft die Erfindung ein Verfahren zum Betreiben eines Mikrofonsystems gemäß dem Oberbegriff von Patentanspruch 9.

In Kraftfahrzeugen kommt heute eine Vielzahl von Mikrofonen zum Einsatz. So ist aus der EP 1 695 873 A1 ein Mikrofonarray mit vier Mikrofonen bekannt, bei welchen jeweils zwei Mikrofone einem Fahrer oder Beifahrer zugeteilt werden. Aus der DE 43 15 000 A1 ist eine geräuschkompensierte Freisprechanlage in Kraftfahrzeugen bekannt, bei welcher im Bereich eines Rückspiegels zwei Richtmikrofone verbaut sind. Aus der DE 102 17 822 C1 ist schließlich ein Verfahren und eine Vorrichtung zur Blickrichtungserkennung einer Person mittels wenigstens eines richtungsselektiven Mikrofons bekannt.

Aus der DE 199 38 171 A1 ist für eine gute Kommunikation von Insassen in einem Fahrzeug eine Verarbeitung von akustischen Signalen für mehrere Positionen vorgeschlagen, bei welcher unterschiedliche akustische Signals derart gesteuert werden, dass eine akustische Zone, beispielsweise eine Ruhezone eingerichtet wird. In der Ruhezone können störende Geräusche kompensiert werden. Die WO2009/130513 A1 offenbart ein Rauschunterdrückungssystem mit zwei Mikrofonen und aus der DE 10 2013 007 141 A1 ist ein Spracheingabesystem für ein Kraftfahrzeug bekannt, welches mindestens zwei Mikrofone aufweist.

Die DE 10 2014 013 919 A1 offenbart ein Mikrofonsystem mit drei in Form eines gleichschenkligen Dreiecks an jeweiligen Ecken des Dreiecks angeordneten Mikrofonen, bei welchen die Signale von dem ersten und dem zweiten Mikrofon derart verarbeitet werden, dass eine auf einen Fahrerplatz ausgerichtete Richtcharakteristik bereitgestellt wird und die Signale von dem zweiten und dem dritten Mikrofon derart verarbeitet werden, dass eine auf einen Beifahrerplatz ausgerichtete Richtcharakteristik bereitgestellt wird.

Die Druckschrift DE 10 2010 034 237 A1 beschreibt ein Mikrofon System für ein Kraftfahrzeug, das eine Mehrzahl von im Kraftfahrzeug verteilten Mikrofoneinrichtungen umfasst. Zudem beschreibt diese Druckschrift ein Verfahren zur Generierung einer Mikrofon-Richtwirkung in Bezug auf eine akustische Quelle innerhalb eines Kraftfahrzeugs. Die Mikrofoneinrichtungen können hierbei einzelnen Sitz- beziehungsweise Sprechplätzen im Fahrzeug zugeordnet sein, wobei die Einstellung der Richtwirkung der Mikrofone durch entsprechende Berechnung in einer Headunit erfolgt. Die Richtwirkungsberechnung der einzelnen Mikrofone des in dieser Druckschrift vorgeschlagenen Mikrofonclusters kann, falls die einzelnen Mikrofone jeweils eine Kugelcharakteristik aufweisen, sehr flexibel sein. Beispielsweise kann für Freisprechen die Richtwirkung adaptiv gefunden werden und bei unterschiedlichen Geräuschen adaptiv verschieden stark ausgeprägt werden.

In der Publikation von J. Dmochowski und R. Goubran mit dem Titel "Combined Beamforming and Noise Cancellation" der "Instrumentation and Measurement Technology Conference IMTC", Mai 2005, Ottawa, Kanada (XP010900579) wird allgemein vorgeschlagen, Mikrofone eines Mikrofonclusters derart anzusteuern, dass ein Lärmsignal und ein Sprechsignal erhalten werden.

In der Druckschrift DE 10 2015 220 400 A1 wird ein Tonsignal-Verarbeitungssystem zum Ausführen einer Freisprechfunktion ungeachtet der Position von Insassen, die ein Mikrofon verwenden, beschrieben. Hierbei wird zunächst die Tonquelle innerhalb des Kraftfahrzeugs gesucht. Dies erfolgt, indem zum Beispiel vier Strahlenbündel mit Eingabemustern in einem vorgegebenen Winkel mittels eines digitalen Wandlers (eines digitalen Signalprozessors, DSP) durchsucht werden. Hierbei wird letztendlich das Strahlenbündel mit der größten Intensität für jeden Abschnitt im Kraftfahrzeug ausgewählt. Gemäß der Lehre dieser Druckschrift wird somit das akustische Signal gesucht und gefunden, das aufgrund seiner Intensität das Strahlenbündel darstellt, das akustische Signale aus dem Bereich innerhalb des Kraftfahrzeugs enthält, in dem ein Sprecher mit hoher Wahrscheinlichkeit zu erwarten ist.

Es ergibt sich die Aufgabe, ein Mikrofonsystem für ein Kraftfahrzeug bereitzustellen, bei welchem eine Qualität eines Nutzsignals verbessert ist.

Diese Aufgabe wird durch die Gegenstände der unabhängigen Patentansprüche gelöst. Vorteilhafte Ausführungsformen ergeben sich aus den abhängigen Patentansprüchen, der Beschreibung und den Figuren.

Die Erfindung betrifft ein Mikrofonsystem für ein Kraftfahrzeug mit einem Mikrofongehäuse, in welchem ein erstes Mikrofon, ein zweites Mikrofon und ein drittes Mikrofon angeordnet sind, sowie mit einer Signalverarbeitungseinrichtung, welche dazu ausgebildet ist, jeweilige von den Mikrofonen bereitgestellte Signale zu verarbeiten. Dabei ist die Signalverarbeitungseinrichtung ausgebildet, in einem ersten Betriebsmodus die Signale des ersten und des zweiten Mikrofons derart zu verarbeiten, dass eine auf eine erste Position des Fahrerplatzes des Kraftfahrzeugs ausgerichtete (erste) Fahrer-Richtcharakteristik bereitgestellt wird, und/oder in dem ersten Betriebsmodus die Signale des zweiten und dritten Mikrofons derart zu verarbeiten, dass eine auf eine erste Position eines Beifahrerplatzes des Kraftfahrzeugs ausgerichtete (erste) Beifahrer-Richtcharakteristik bereitgestellt wird.

Die Signalverarbeitungseinrichtung ist dabei ausgebildet, in dem ersten Betriebsmodus eine von der Fahrer-Richtcharakteristik verschiedene Fahrer-Störschall-Richtcharakteristik bereitzustellen, indem die Signale zumindest zweier Mikrofone zusammen verarbeitet werden, beispielsweise ein Differenzsignal gebildet wird, und ein der Fahrer-Richtcharakteristik zugeordnetes Fahrernutzsignal, also ein Signal, welches zumindest vorwiegend aus der der Fahrer-Richtcharakteristik entsprechenden Richtung kommt, in Abhängigkeit von einem der Fahrer-Störschall-Richtcharakteristik zugeordneten Fahrer-Stör-Signal, also einem Signal aus der der Fahrer-Störschall-Richtcharakteristik entsprechenden Richtung, weiterzuverarbeiten, insbesondere zu filtern.

Alternativ oder ergänzend ist die Signalverarbeitungseinrichtung ausgebildet, in dem ersten Betriebsmodus eine von der Beifahrer-Richtcharakteristik verschiedene Beifahrer-Störschall-Richtcharakteristik bereitzustellen, indem die Signale zumindest zweier Mikrofone zusammen verarbeitet werden, und ein der Beifahrer-Richtcharakteristik zugeordnetes Beifahrer-Nutzsignal, also ein Signal aus der der Beifahrer-Richtcharakteristik entsprechenden Richtung, in Abhängigkeit von einem der Beifahrer-Störschall-Richtcharakteristik zugeordneten Beifahrer-Störsignal, also einem Signal aus der der Beifahrer-Störschall-Richtcharakteristik entsprechenden Richtung, weiterzuverarbeiten, insbesondere zu filtern. Das "oder" des kennzeichnenden Teils des Hauptanspruchs kann somit als ein "und/oder" angesehen werden.

Das Weiterverarbeiten der jeweiligen Nutzsignale umfasst also ein Verbessern des Signals beziehungsweise der Signalqualität durch eine Störschall- oder Störgeräuschunterdrückung durch die bewusste Bildung einer Richtcharakteristik, der jeweiligen Störschall-Richtcharakteristik, welche in eine von der Richtung des Nutzsignals, welche durch die entsprechende Fahrer- oder Beifahrer-Richtcharakteristik bestimmt ist, verschiedene Richtung orientiert ist, um das aus den Signalen der beiden Mikrofone gewonnene Störsignal zur Filterung des Nutzsignals zu verwenden. Dies funktioniert, da in dem Nutzsignal trotz der diesem zugeordneten oder zugrundeliegenden Richtcharakteristik stets auch Anteile des Störsignals enthalten sind. Diese Anteile können somit identifiziert und effizient unterdrückt werden. Dabei sind die Störschall-Richtcharakteristiken, also die Fahrer- und/oder Beifahrer- Störschall-Richtcharakteristik, jeweils von der oder den Fahrerbeziehungsweise Beifahrer-Richtcharakteristiken verschieden. Dabei sind die Störschall-Richtcharakteristiken von allen einem Nutzsignal zuordenbaren oder zugeordneten Richtcharakteristiken des Mikrofonsystems verschieden.

Das hat den Vorteil, dass Nebengeräusche, welche durch das Störsignal oder den Störschall repräsentiert werden und welche einer anderen Position als den der ausgewählten bereitgestellten Richtcharakteristik entsprechenden Positionen stammen, unterdrückt werden. Gerade wenn die entsprechende Störschall-Richtcharakteristik nicht mit der einem weiteren Nutzsignal zuordenbaren Richtcharakteristik zusammenfällt oder überlappt, kann hier Störschall besonders effektiv unterdrückt werden. Damit wird die Qualität des entsprechenden Nutzsignals verbessert, indem ein Rauschen (welches dem Störsignal oder Störschall entsprechen kann) vermindert wird. Auch wird die Flexibilität des Mikrofonsystems verbessert, da so in unterschiedlichen Situationen jeweils eine passende Störschall-Richtcharakteristik gewählt werden kann und somit das Nutzsignal in bestmöglicher Qualität durch das Mikrofonsystem erfasst, gespeichert und/oder weitergeleitet werden kann.

Dabei ist in dem Mikrofongehäuse und an den Mikrofonen selbst kein Umbau erforderlich, und auch ein zusätzliches Mikrofon wird nicht benötigt. Dann kann ein verbessertes Mikrofonsystem mit einem besonders geringen Aufwand implementiert werden. Für das Auswählen der entsprechenden Richtcharakteristik ist auch kein externes Signal eines Bedienelementes oder eines weiteren Systems des Kraftfahrzeugs erforderlich, sodass für die erweiterte Funktionalität der Störschallunterdrückung im Nutzsignal beispielsweise keine zusätzliche Vernetzung des Mikrofonsystems mit weiteren Systemen des Kraftfahrzeugs nötigt ist, sondern erfindungsgemäß stets automatisch die Störschall-Richtcharakteristik mit einer ausgehend von dem Mikrofonsystem zu einer Haupterstreckungsrichtung der Fahrer- oder Beifahrer-Richtcharakteristik entgegengesetzt orientierten Haupterstreckungsrichtung gewählt werden kann.

Grundsätzlich funktioniert die geschilderte Störschallunterdrückung auch mit nur zwei Mikrofonen, wobei hier allerdings nur jeweils eine Richtcharakteristik und Störschall-Richtcharakteristik erzeugt werden kann.

In einer vorteilhaften Ausführungsform ist dabei vorgesehen, dass die drei Mikrofone als Druckmikrofone ausgebildet sind, welche jeweils eine Kugelcharakteristik aufweisen. Das hat den Vorteil, dass die Mikrofone besonders günstig und einfach aufgebaut sind. Überdies kann gerade aufgrund der Kugelcharakteristik der unterschiedlichen Mikrofone in den verschiedenen Betriebsmodi jeweils eine sehr gute Richtcharakteristik durch die Kombination der unterschiedlichen Mikrofone und der jeweiligen Kugelcharakteristik erzielt werden. Dies wäre beispielsweise anders, wenn bereits eines oder mehrere der Mikrofone eine spezielle gerichtete Charakteristik aufweisen würden, welche beispielsweise auf die erste Position des Fahrerplatzes optimiert wäre.

In einer weiteren Ausführungsform ist vorgesehen, dass die drei Mikrofone in Form eines gleichschenkligen Dreiecks an jeweiligen Ecken des Dreiecks angeordnet sind, wobei insbesondere das zweite Mikrofon an der Spitze des Dreiecks angeordnet ist. Das hat den Vorteil, dass Fahrer- und Beifahrer-Richtcharakteristik symmetrisch zueinander angeordnet sind, sodass das Mikrofongehäuse auf einfache Weise in dem Kraftfahrzeug so positioniert werden kann, dass Geräusche unterschiedlichen Positionen des Fahrerplatzes und in unterschiedlichen Positionen des Beifahrerplatzes gleich gut erfasst werden können. Entsprechend eignen sich hier die Mikrofone auch in besonders günstiger Weise zur dem Schaffen der jeweiligen Störschall-Richtcharakteristik und somit für das effektive Unterdrücken des Störschalls, das heißt der Störsignalkomponenten oder Störsignalanteile in dem jeweiligen Nutzsignal.

In einer besonders bevorzugten Ausführungsform ist dabei vorgesehen, dass das Dreieck ein stumpfwinkliges Dreieck ist, insbesondere mit einem Winkel an der Spitze des Dreiecks von zumindest 100 Grad. Das hat den Vorteil, dass für die unterschiedlichen Positionen von Fahrer- und Beifahrerplatz und die unterschiedlichen Positionen potentieller Störschallquellen eine jeweils geeignete Richtcharakteristik bereitgestellt werden kann und zugleich ein Abstand zwischen dem Mikrofongehäuse und dem Fahrer- beziehungsweise Beifahrerplatz minimiert werden kann, insbesondere zwischen dem Mikrofongehäuse und der ersten Position von Fahrer- und Beifahrerplatz. Damit können Geräusche in unterschiedlichen Positionen von Fahrer- beziehungsweise Beifahrerplatz besonders gut erfasst werden und zugleich der entsprechende Störschall besonders gut unterdrückt werden.

Erfindungsgemäß ist vorgesehen, dass die Signalverarbeitungseinrichtung ausgebildet ist, für das Bereitstellen der Fahrer-Störschall-Richtcharakteristik die Signale des zweiten und des ersten Mikrofons derart zu verarbeiten, dass die Fahrer-Störschall-Richtcharakteristik ausgehend von dem Mikrofonsystem eine zu einer Haupterstreckungsrichtung der Fahrer-Richtcharakteristik entgegengesetzt orientierte Haupterstreckungsrichtung aufweist und/oder für das Bereitstellen der Beifahrer-Störschall-Richtcharakteristik die Signale des dritten und des zweiten Mikrofons derart verarbeiten, dass die Beifahrer- Störschall-Richtcharakteristik ausgehend von dem Mikrofonsystem eine zu einer Haupterstreckungsrichtung der Beifahrer-Richtcharakteristik entgegengesetzt orientierte Haupterstreckungsrichtung aufweist. Die Orientierung der jeweiligen Richtungen ausgehend von dem Mikrofonsystem ist dabei jeweils von dem Mikrofonsystem fort entlang der Haupterstreckungsrichtung der Fahrerbeziehungsweise Beifahrer-Richtcharakteristik vorgegeben.

Allgemein kann auch vorgesehen sein, dass die Signalverarbeitungseinrichtung ausgebildet ist für das Bereitstellen der Fahrer-Störschall-Richtcharakteristik und/oder Beifahrer-Störschall-Richtcharakteristik die Signale der zwei Mikrofone zusammen derart zu verarbeiten (beziehungsweise können die jeweiligen Mikrofone derart gewählt sein), dass die Fahrer-Störschall-Richtcharakteristik und/oder die Beifahrer-Störschall-Richtcharakteristik ausgehend vom Mikrofonsystem eine zu der Haupterstreckungsrichtung der Fahrer- beziehungsweise Beifahrer-Richtcharakteristik entgegengesetzt orientierte Haupterstreckung aufweist. Die entgegengesetzte Orientierung oder Ausrichtung von Störschall-Richtcharakteristik und Fahrer- beziehungsweise Beifahrer-Richtcharakteristik kann also auch für andere als das zweite und erste beziehungsweise dritte und zweite Mikrofon vorgegeben sein.

Das hat den Vorteil, dass eine besonders effektive Störschallunterdrückung möglich ist, da ein Signal oder Schall, welches oder welcher aus der entgegengesetzten Richtung der jeweils auf Fahrer- beziehungsweise Beifahrerplatz orientierten Fahrer- beziehungsweise Beifahrer-Richtcharakteristik kommt, mit besonders großer Sicherheit ein Störschall ist und somit in dem erfassten Nutzsignal zu unterdrücken ist. Überdies kann so bei bestimmungsgemäßer Anordnung eine zur Windschutzscheibe hin orientierte Störschall-Richtcharakteristik erzielt werden. Dies ist besonders vorteilhaft, da an der Windschutzscheibe besonderes zahlreiche Reflexionen und somit Störsignale erzeugt werden.

In einer besonders vorteilhaften Ausführungsform ist vorgesehen, dass die Signalverarbeitungseinrichtung ausgebildet ist, in einem weiteren zweiten Betriebsmodus die Signale des ersten und dritten Mikrofons derart zu verarbeiten, dass eine alternative Fahrer-Richtcharakteristik bereitgestellt wird, welche auf eine zweite Position des Fahrerplatzes ausgerichtet ist, und/oder in dem weiteren zweiten Betriebsmodus die Signale des zweiten und des dritten Mikrofons derart zu verarbeiten, dass eine alternative Beifahrer-Richtcharakteristik bereitgestellt wird, welche auf eine zweite Position des Beifahrerplatzes ausgerichtet ist. Dabei ist die Signalverarbeitungseinrichtung ausgebildet, jeweils eine entsprechende alternative Fahrer-Störschall-Richtcharakteristik und/oder alternative Beifahrer-Störschall-Richtcharakteristik bereitzustellen, indem die Signale von den jeweils entsprechenden Mikrofonen zusammen verarbeitet werden, insbesondere die Signale des dritten und ersten Mikrofons für die alternative Fahrer-Störschall-Richtcharakteristik und die Signale des dritten und zweiten Mikrofons für die alternative Beifahrer-Störschall-Richtcharakteristik.

Das hat den Vorteil, dass in dem ersten Betriebsmodus ein akustisches Signal von der ersten Position des Fahrerplatzes mit einer entsprechenden, auf die erste Position optimierten ersten Fahrer-Richtcharakteristik besonders gut erfasst werden kann und zugleich auch bei einer veränderten Position des Fahrerplatzes, also beispielsweise wenn ein Fahrer den Sitzplatz entsprechend seiner Körpergröße verschiebt, um besser an entsprechende Pedale gelangen zu können, eine alternative Fahrer-Richtcharakteristik bereitgestellt werden kann, welche ein akustisches Signal von der neuen Position des Fahrerplatzes optimal erfasst. Entsprechend gilt selbstverständlich diese erhöhte Flexibilität auch für die jeweilige alternative Störschall-Richtcharakteristik, sodass hier der Störschall oder das Rauschen besonders gut detektiert und somit in dem Nutzsignal unterdrückt werden kann. Entsprechendes gilt mutatis mutandis für die Beifahrer-Richtcharakteristik.

In einer anderen vorteilhaften Ausführungsform ist vorgesehen, dass die Signalverarbeitungseinrichtung ausgebildet ist, für das Bereitstellen der jeweiligen Störschall-Richtcharakteristik, also der Fahrer-Störschall-Richtcharakteristik und/oder der Beifahrer-Störschall-Richtcharakteristik, auch mehrerer Fahrer- oder Beifahrer-Störschall-Richtcharakteristiken, jeweils das Signal eines der drei oder vier Mikrofone zusammen mit einem Mischsignal von zumindest zwei oder drei anderen Mikrofonen zu verarbeiten.

Das hat den Vorteil, dass die Ausrichtung der jeweiligen Störschall-Richtcharakteristik jeweils besonders genau angegeben beziehungsweise vorgegeben werden kann, sodass entsprechender der Störschall im jeweiligen Nutzsignal, also im Fahrer- und/oder Beifahrer-Nutzsignal, besonders effektiv unterdrückt werden kann.

Entsprechend kann beispielsweise auch in einer anderen Ausführungsform vorgesehen sein, dass die Signalverarbeitungseinrichtung ausgebildet ist, das Signal des ersten Mikrofons oder ein Mischsignal des zweiten und dritten Mikrofons derart zu verarbeiten, dass eine Fahrer-Richtcharakteristik bereitgestellt wird, welche auf eine Position des Fahrerplatzes zwischen der ersten und der zweiten Position des Fahrerplates ausgerichtet ist. Alternativ oder ergänzend kann die Signalverarbeitungseinrichtung dafür ausgebildet sein, das Signal des dritten Mikrofons und ein Mischsignal des ersten und des zweiten Mikrofons derart zu verarbeiten, dass eine Beifahrer-Richtcharakteristik bereitgestellt wird, welche auf eine Position des Beifahrerplatzes zwischen der ersten und der zweiten Position des Beifahrerplatzes ausgerichtet ist. Durch das Mischsignal des zweiten und des dritten beziehungsweise des ersten und des zweiten Mikrofons wird somit ein virtuelles Signal eines weiteren Mikrofons, welches sich jeweils zwischen dem zweiten und dritten beziehungsweise ersten und zweiten Mikrofon befindet, erzeugt. Dabei kann die Position des weiteren Mikrofons zwischen den beiden jeweiligen anderen Mikrofonen, also zwischen dem zweiten und dritten beziehungsweise ersten und zweiten Mikrofon, durch eine entsprechende Wichtung von zweitem und drittem beziehungsweise erstem und zweitem Signal des jeweiligen Mikrofons in dem jeweiligen Mischsignal eingestellt werden. Dies kann beispielsweise über ein Addieren des jeweiligen Signals des zweiten und dritten beziehungsweise ersten und zweiten Mikrofons, der Einzelsignale des jeweiligen Mischsignals, zu einem jeweiligen gewichteten Mischsignal erreicht werden. Über ein entsprechendes Addieren und Subtrahieren kann so aus dem Mischsignal und dem jeweiligen anderen Signal die weitere Richtcharakteristik bereitgestellt werden. Über eine unterschiedliche Wichtung der einzelnen Signale der jeweiligen beiden Mikrofone in dem Mischsignal kann dabei die Ausrichtung der Richtcharakteristik für Beifahrer- und/oder Fahrerplatz angepasst werden. Entsprechendes gilt auch für das Mischsignal und das Signal eines der drei Mikrofone und das Mischsignal von zumindest zwei anderen Mikrofonen bei dem Bereitstellen der jeweiligen Störschall-Richtcharakteristik.

Das hat den Vorteil, dass die Beifahrer- und Fahrer-Richtcharakteristik und entsprechend die jeweilige Störschall-Richtcharakteristik nicht nur für eine erste und zweite Position optimiert werden kann, sondern im Prinzip für beliebige Zwischenpositionen. Auch hier kann die jeweilige Wichtung für die Einzelsignale der Mischsignale automatisch ermittelt werden, beispielsweise indem durch die Signalverarbeitungseinrichtung detektiert wird, aus welcher Richtung beziehungsweise mittels welcher der unterschiedlichen Richtcharakteristiken jeweils das beste akustische Signal oder eben das schlechteste akustische Signal erfasst wird. Dies kann aufwandsarm ohne zusätzliche Mikrofone, insbesondere auch ohne eine hardwareseitige Anpassung des Mikrofonsystems, erfolgen, beispielsweise indem die digitalisierten Signale des Mikrofons in der Signalverarbeitungseinrichtung entsprechend verarbeitet werden.

In einer weiteren vorteilhaften Ausführungsform ist vorgesehen, dass in dem Mikrofongehäuse ein viertes Mikrofon angeordnet ist, und die Signalverarbeitungseinrichtung ausgebildet ist, in einem anderen dritten Betriebsmodus die Signale des ersten und vierten Mikrofons derart zu verarbeiten, dass eine andere alternative Fahrer-Richtcharakteristik bereitgestellt wird, welche auf eine dritte Position des Fahrerplatzes ausgerichtet ist und/oder in dem anderen dritten Betriebsmodus die Signale von dem vierten und dem dritten Mikrofon derart zu verarbeiten, dass eine andere alternative Beifahrer-Richtcharakteristik bereitgestellt wird, welche auf eine dritte Position des Beifahrerplatzes ausgerichtet ist, wobei die zweite Position von dem Fahrerplatz zwischen der ersten und der dritten Position des Fahrerplatzes angeordnet ist und die zweite Position des Beifahrerplatzes zwischen der ersten und der dritten Position des Beifahrerplatzes angeordnet ist. Alternativ oder ergänzend können in dem dritten Betriebsmodus die Signale des ersten und des vierten Mikrofons auch derart verarbeitet werden, dass eine erste Rückbank-Richtcharakteristik bereitgestellt wird, welche auf eine erste Position auf einer Rückbank des Kraftfahrzeugs ausgerichtet ist, und/oder die Signale des dritten und des vierten Mikrofons derart verarbeitet werden, dass eine von der ersten verschiedene zweite Rückbank-Richtcharakteristik bereitgestellt wird, welche auf eine von der ersten verschiedenen zweiten Position auf der Rückbank des Kraftfahrzeugs ausgerichtet ist, und/oder die Signale des zweiten und des vierten Mikrofons derart verarbeitet werden, dass eine von der ersten und zweiten verschiedene dritte Rückbank-Richtcharakteristik bereitgestellt wird, welche auf eine von der ersten und zweiten verschiedenen dritten Position auf der Rückbank des Kraftfahrzeugs ausgerichtet ist. Insbesondere kann die dritte Position auf der Rückbank zwischen der ersten und der zweiten Position angeordnet sein.

Die Signalverarbeitungseinrichtung ist dabei weiterhin ausgebildet, jeweils eine entsprechende andere alternative Fahrer-Störschall-Richtcharakteristik und/oder andere alternative Beifahrer-Störschall-Richtcharakteristik bereitzustellen, indem die Signale von den entsprechenden Mikrofonen zusammen verarbeitet werden, insbesondere die Signale des vierten und ersten Mikrofons für die andere alternative Fahrer-Störschall-Richtcharakteristik und die Signale des dritten und vierten Mikrofons für die andere alternative Beifahrer-Störschall-Richtcharakteristik. Mutatis mutandis gilt dies jeweils auch für die Rückbank-Richtcharakteristiken.

Das hat den Vorteil, dass die Flexibilität des Mikrofonsystems nochmals erhöht ist und mit einer geringfügigen Änderung, nämlich dem einen zusätzlichen Mikrofon im Mikrofongehäuse, eine Vielzahl an weiteren Positionen für Fahrer und Beifahrer beziehungsweise einen oder mehrere Passagiere auf der Rückbank sowie für die jeweilige Rauschquelle oder Störquelle des Störschalls berücksichtigt beziehungsweise kompensiert werden kann.

In einer weiteren vorteilhaften Ausführungsform ist dabei vorgesehen, dass das erste, dritte und vierte Mikrofon in Form eines weiteren gleichschenkligen Dreiecks an jeweiligen Ecken des weiteren Dreiecks angeordnet sind, wobei das vierte Mikrofon an der Spitze des Dreiecks angeordnet ist. Die genannte Geometrie ist dabei aufgrund der Symmetrie für ein Erfassen des akustischen Nutzsignals von Fahrer- und/oder Beifahrerplatz sowie das entsprechende Erfassen des Störschalls besonders vorteilhaft.

Bevorzugt kann dabei vorgesehen sein, dass der Abstand des vierten Mikrofons von dem ersten und dem dritten Mikrofon geringer ist als der Abstand des zweiten Mikrofons von dem ersten und dem dritten Mikrofon. Dadurch lässt sich in dem ersten Betriebsmodus ergänzend zu der ersten Fahrer-Richtcharakteristik, welche auf die erste Position ausgerichtet ist, durch ein Verarbeiten der Signale des dritten und vierten Mikrofons durch die Signalverarbeitungseinrichtung eine zusätzliche Fahrer-Richtcharakteristik bereitstellen, welche wie die erste Fahrer-Richtcharakteristik auf die erste Position des Fahrerplatzes ausgerichtet ist. Entsprechend lassen sich vielfältige Störschall-Richtcharakteristiken bereitstellen. Gleiches gilt mutatis mutandis für die Beifahrer-Richtcharakteristik, welche auf die erste Position des Beifahrerplatzes ausgerichtet ist, und eine Verarbeitung der beiden Signale des ersten und des vierten Mikrofons. Dadurch wird eine besonders starke Richtwirkung des Mikrofonsystems erreicht, sodass ein akustisches Signal aus der jeweiligen Position von Fahrer- beziehungsweise Beifahrerplatz besonders gut erfasst werden kann und entsprechend der Störschall ebenfalls besonders gut erfasst und entsprechend aus dem Nutzsignal herausgerechnet oder herausgefiltert werden kann. Die dabei erreichte erhöhte Dynamik in der richtungsabhängigen Empfindlichkeit des Mikrofonsystems kann ebenfalls genutzt werden, um Schwankungen in der Signalqualität zu minimieren.

Die Erfindung betrifft auch ein Kraftfahrzeug mit einem Mikrofonsystem nach einer der beschriebenen Ausführungsformen.

Die Erfindung betrifft auch ein Verfahren zum Betreiben eines Mikrofonsystems eines Kraftfahrzeugs gemäß den Verfahrensschritten des Anspruchs 9. Vorteile und vorteilhafte Ausführungsformen des Verfahrens entsprechen hier Vorteilen und vorteilhaften Ausführungsformen des Mikrofonsystems und umgekehrt.

Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, wobei die Erfindung durch den nachstehend angegebenen Anspruchssatz definiert ist. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Ausführungsbeispiele der Erfindung werden nachfolgend anhand schematischer Zeichnungen näher erläutert.

Dabei zeigen:
- Fig. 1: ein Kraftfahrzeug mit einer beispielhaften Ausführungsform eines Mikrofonsystems;
- Fig. 2: eine schematische Darstellung von beispielhaften Richtcharakteristiken einer ersten beispielhaften Ausführungsform eines Mikrofonsystems; und
- Fig. 3: eine weitere schematische Darstellung von weiteren beispielhaften Richtcharakteristiken einer weiteren beispielhaften Ausführungsform eines Mikrofonsystems.

Gleiche oder funktionsgleiche Elemente werden dabei in den Figuren mit gleichen Bezugszeichen versehen.

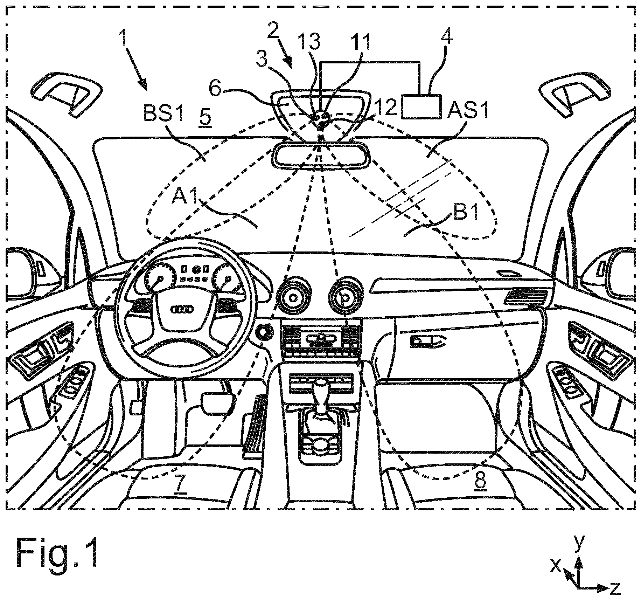

In Fig. 1 ist eine beispielhafte Ausführungsform eines Mikrofonsystems 2 in einem Kraftfahrzeug 1 dargestellt. Das Kraftfahrzeug 1 ist dabei perspektivisch aus einer Innenperspektive dargestellt. Das Mikrofonsystem 2 umfasst dabei im gezeigten Beispiel ein Mikrofongehäuse 3 mit einem ersten Mikrofon 11, einem zweiten Mikrofon 12 und einem dritten Mikrofon 13. Diese Mikrofone 11 bis 13 sind vorliegend in Form eines gleichschenkligen Dreiecks an jeweiligen Ecken des Dreiecks angeordnet. Dabei ist hier das zweite Mikrofon 12 an der Spitze des Dreiecks angeordnet. Die Mikrofone 11 bis 13 sind mit einer Signalverarbeitungseinrichtung 4 gekoppelt. Im gezeigten Beispiel ist dabei das Mikrofongehäuse 3 mit den Mikrofonen 11 bis 13 in einem Dachhimmel 5 des Kraftfahrzeugs 1, vorliegend in einem Dachmodul 6, welches beispielsweise als Innenraumbeleuchtungseinrichtung ausgeführt sein kann, angeordnet.

Die Signalverarbeitungseinrichtung 4 ist nun ausgebildet, die Signale des ersten und zweiten Mikrofons 11, 12 derart zu verarbeiten, dass eine auf eine erste Position eines Fahrerplatzes 7 des Kraftfahrzeugs 1 ausgerichtete erste Fahrer-Richtcharakteristik A1 bereitgestellt wird, sowie die Signale des zweiten und dritten Mikrofons 12, 13 derart zu verarbeiten, dass eine auf eine erste Position eines Beifahrerplatzes 8 des Kraftfahrzeugs 1 ausgerichtete erste Beifahrer-Richtcharakteristik B1 bereitgestellt wird. Die Signalverarbeitungseinrichtung 4 ist somit ausgebildet, ein Fahrer- beziehungsweise Beifahrer-Nutzsignal aus der jeweiligen Position des Fahrer- beziehungsweise Beifahrerplatzes 7, 8 zu erfassen.

Die Signalverarbeitungseinrichtung 4 ist dabei auch ausgebildet, eine Fahrer-Störschall-Richtcharakteristik AS1 bereitzustellen, indem die Signale zweier Mikrofone, nämlich des zweiten und ersten Mikrofons 12, 11, zusammen verarbeitet werden und eine Beifahrer-Störschall-Richtcharakteristik BS1 bereitzustellen, indem die Signale zweier Mikrofone, nämlich des dritten und zweiten Mikrofons 13, 12, zusammen verarbeitet werden. In dieser erfindungsgemäßen Ausführungsform erstrecken sich Fahrer-Richtcharakteristik A1 und Fahrer-Störschall-Richtcharakteristik AS1 ausgehend von dem Mikrofongehäuse 3 in entgegengesetzte Richtungen, nämlich die Fahrer-Richtcharakteristik A1 diagonal in den Innenraum in Richtung des Fahrersitzes 7 und die Fahrer-Störschall-Richtcharakteristik AS1 diagonal in Richtung eines beifahrerseitigen Bereiches der Windschutzscheibe.

Die Signalverarbeitungseinrichtung 4 ist dabei auch ausgebildet, ein entsprechend erfasstes, der Fahrer-Richtcharakteristik A1 zugeordnetes, also aus der Richtung der Fahrer-Richtcharakteristik A1 stammendes Fahrer-Nutzsignal in Abhängigkeit von einem der Fahrer-Störschall-Richtcharakteristik AS1 zugeordneten Fahrer-Störsignal weiterzuverarbeiten sowie vorliegend entsprechend ein der Beifahrer-Richtcharakteristik B1 zugeordnetes Beifahrer-Nutzsignal in Abhängigkeit von einem der Beifahrer-Störschall-Richtcharakteristik BS1 zugeordneten Beifahrer-Störsignal weiterzuverarbeiten. Dabei kann zusätzlich zu dem Fahrer-Störsignal auch das Beifahrer-Störsignal genutzt werden, um das Fahrer-Nutzsignal weiterzuverarbeiten, also zu filtern oder zu verbessern, das heißt also das Fahrer-Nutzsignal auch in Abhängigkeit von dem der Beifahrer-Störschall-Richtcharakteristik BS1 zugeordneten Beifahrer-Störsignal weiterverarbeitet und/oder entsprechend das Beifahrer-Nutzsignal auch in Abhängigkeit von dem Fahrer-Störsignal weiterverarbeitet werden.

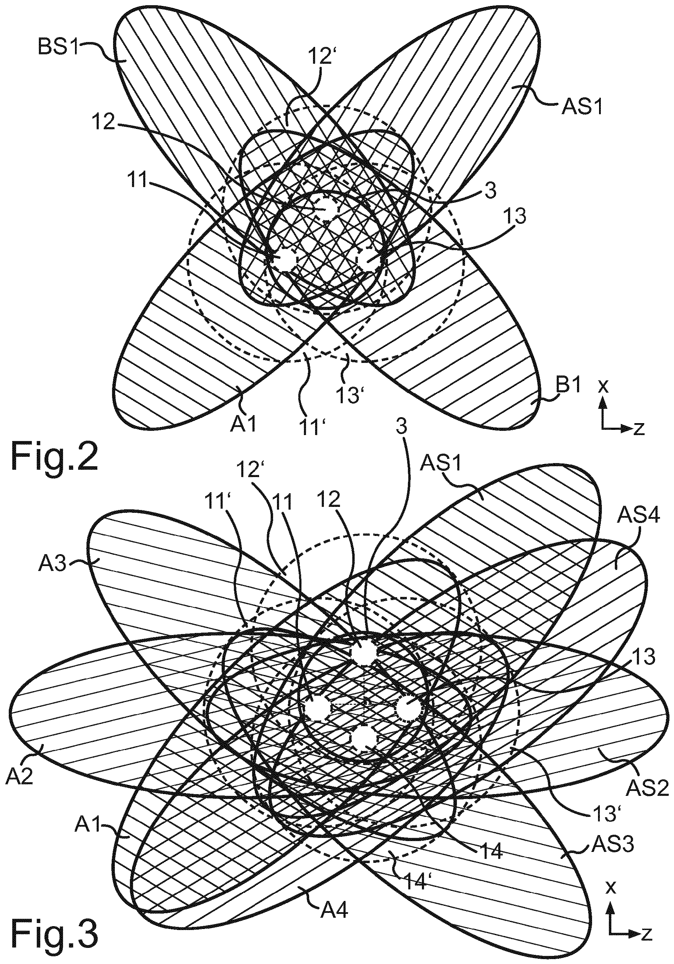

In Fig. 2 sind beispielhafte Richtcharakteristiken einer ersten beispielhaften Ausführungsform des Mikrofonsystems dargestellt. Die Mikrofone 11 bis 13 weisen dabei jeweils eine kugelförmige Richtcharakteristik 11', 12', 13' auf. Zusätzlich zu den ersten Fahrer- und Beifahrer-Richtcharakteristiken A1, A2, welche sich über ein entsprechendes Verarbeiten, beispielsweise ein Addieren oder Subtrahieren der Signale des ersten und zweiten Mikrofons 11, 12 beziehungsweise des dritten und zweiten Mikrofons 13, 12 für das Mikrofonsystem 2 bereitstellen oder erzeugen lassen, sind hier noch die beiden zweiten Störschall-Richtcharakteristiken, nämlich die erste Fahrer-Störschall-Richtcharakteristik AS1 sowie die erste Beifahrer- Störschall-Richtcharakteristik BS2 dargestellt. Diese haben im gezeigten Beispiel eine linsenförmige Ausdehnung. Die Hauptachsen und damit Haupterstreckungsrichtungen der jeweiligen Richtcharakteristiken A1, B1, AS1, BS1 verlaufen dabei durch die jeweiligen Mikrofone, also für die erste Fahrer-Richtcharakteristik A1 durch das erste und zweite Mikrofon 11, 12 und für die erste Beifahrer-Richtcharakteristik B1 durch das zweite und dritte Mikrofon 12, 13 sowie für die Störschall-Richtcharakteristiken AS1, BS1 durch das erste und zweite Mikrofon 11, 12 beziehungsweise zweite und dritte Mikrofon 12, 13.

Dabei sind die Hauptachsen der Fahrer-Richtcharakteristiken A1, AS1 relativ zu den Hauptachsen der Beifahrer-Richtcharakteristiken B1, BS1 in der xy-Ebene verkippt, sodass sich durch die Richtcharakteristiken jeweils unterschiedliche Positionen des Fahrer- beziehungsweise Beifahrerplatzes abdecken lassen sowie unterschiedliche Positionen für eine Störschallquelle, wie beispielsweise die Windschutzscheibe in Fig. 1.

Erfindungsgemäß sind also die Störschall-Richtcharakteristiken jeweils genau entgegengesetzt zur Fahrer- beziehungsweise Beifahrer-Richtcharakteristik orientiert.

In Fig. 3 ist nun eine weitere schematische Darstellung von weiteren beispielhaften Richtcharakteristiken einer weiteren beispielhaften Ausführungsform des Mikrofonsystems 2 dargestellt. Dabei sind aus Gründen der Übersichtlichkeit die dargestellten Richtcharakteristiken A1 bis A4 ausschließlich Fahrer-Richtcharakteristiken. Aufgrund der strukturellen und funktionellen Geometrie gilt jedoch das im Folgenden für die Fahrer-Richtcharakteristiken A1 bis A4 Beschriebene mutatis mutandis auch für entsprechende Beifahrer-Richtcharakteristiken, wobei dann das erste Mikrofon 11 durch das dritte Mikrofon 13 zu ersetzen ist.

Im gezeigten Beispiel ist nun ein viertes Mikrofon 14 in dem Gehäuse 3 angeordnet. Dabei schneidet hier ein durch das zweite Mikrofon 12 und vierte Mikrofon 14 verlaufende Gerade eine durch das erste Mikrofon 11 und das dritte Mikrofon 13 verlaufende Gerade in einem rechten Winkel. Diese Mikrofone 11 bis 14 können also entsprechend auf einer Raute oder einem Rhombus angeordnet sein. Bevorzugt sind dabei nicht nur die drei ersten Mikrofone 11 bis 13 in Form eines gleichschenkligen Dreiecks an jeweiligen Ecken des Dreiecks angeordnet, sondern auch das erste, dritte und vierte Mikrofon 11 bis 14 in Form eines weiteren gleichschenkligen Dreiecks mit den genannten Mikrofonen 11, 13, 14 an den jeweiligen Ecken.

Wie in dem in Fig. 2 gezeigten Beispiel weisen die Mikrofone 11 bis 14 hier die kugelförmigen Charakteristiken 11' bis 14' auf. Durch entsprechendes Addieren und Subtrahieren der jeweiligen Signale der Mikrofone 11 bis 14 kann hier, wie auch in Fig. 2 beschrieben, eine erste Fahrer-Richtcharakteristik A1 und eine alternative zweite Fahrer-Richtcharakteristik A2 durch das erste und dritte Mikrofon 11, 13. Durch das vierte Mikrofon 14 kann nun durch ein Verarbeiten der Signale des ersten und des vierten Mikrofons 11, 14 eine dritte alternative Fahrer-Richtcharakteristik A3 bereitgestellt werden. Diese ist dabei vorliegend so angeordnet, dass eine entsprechende dritten Position des Fahrerplatzes 7, auf welche die dritte alternative Fahrer-Richtcharakteristik A3 ausgerichtet ist, in der Fahrtrichtung, also in positiver x-Richtung, noch vor der zweiten Fahrer-Richtcharakteristik A2 angeordnet ist. Damit ist die zweite Fahrer-Richtcharakteristik A2 auf die zweite Position des Fahrplatzes zwischen der ersten und der dritten Position des Fahrerplatzes 7 ausgerichtet.

Ergänzend kann in der vorgeschlagenen Ausführungsform die Signalverarbeitungseinrichtung 4 (Fig. 1) ausgebildet sein, alternativ oder ergänzend zu der ersten Fahrer-Richtcharakteristik A1 die Signale des dritten Mikrofons 13 und des vierten Mikrofons 14 derart zu verarbeiten, dass eine vierte Fahrer-Richtcharakteristik A4 bereitgestellt wird, welche ebenfalls auf die erste Position des Fahrerplatzes 7 ausgerichtet ist. Dabei kann die vierte Fahrer-Richtcharakteristik A4 vorgesehen sein, ergänzend gleichzeitig mit der ersten Fahrer-Richtcharakteristik A1 bereitgestellt zu werden, sodass für die erste Position des Fahrerplatzes 7 eine doppelte Abdeckung durch die beiden Fahrer-Richtcharakteristiken A1, A4 erreicht wird.

Entsprechend zu den Fahrer-Richtcharakteristiken A1 bis A4 sind hier durch die gemeinsame Verarbeitung der jeweiligen Mikrofone 11 bis 14 auch Fahrer-Störschall-Richtcharakteristiken AS1 bis AS4 bereitgestellt, welche sich jeweils vorliegend ausgehend vom Mikrofongehäuse 3 eine Haupterstreckungsrichtung aufweisen, welche in die entgegengesetzte Richtung der jeweils zugeordneten Fahrer-Richtcharakteristik A1 bis A4 verläuft. Für eine besonders gute Störschall-Unterdrückung können dabei gleichzeitig auch mehrere oder sämtliche Fahrer-Störschall-Richtcharakteristiken AS1 bis AS4 für eine Fahrer-Richtcharakteristik bereitgestellt werden. Beispielsweise kann so die zweite Fahrer-Richtcharakteristik A2 gewählt werden, um ein Fahrer-Nutzsignal aus der zweiten Position des Fahrerplatzes 7 zu erfassen und zugleich die Fahrer-Störschall-Richtcharakteristiken AS1 bis AS4 gemeinsam bereitgestellt werden, um aus einer Vielzahl von entsprechenden Positionen stammende jeweilige Fahrer-Störsignale zu erfassen und entsprechende Anteile in dem in dem von der zweiten Position des Fahrerplatzes 7 stammenden Fahrer-Nutzsignal zu unterdrücken oder auszufiltern. Hier kann ergänzend auch eine oder mehrere der Beifahrer-Störschall-Richtcharakteristiken BS1 (Fig. 2) bereitgestellt werden, um zusätzlich in dem Fahrer-Nutzsignal auch eine Komponente des Beifahrer-Störsignals zu unterdrücken.

## Patentansprüche

1. Mikrofonsystem (2) für ein Kraftfahrzeug (1), mit
a. einem Mikrofongehäuse (3), in welchem ein erstes Mikrofon (11), ein zweites Mikrofon (12) und ein drittes Mikrofon (13) angeordnet sind;
b. einer Signalverarbeitungseinrichtung (4), welche dazu ausgebildet ist, jeweilige von den Mikrofonen (11, 12, 13) bereitgestellte Signale zu verarbeiten;
wobei die Signalverarbeitungseinrichtung (4) ausgebildet ist,
- die Signale des ersten und des zweiten Mikrofons (11, 12) derart zu verarbeiten, dass eine auf eine Position eines Fahrerplatzes (7) des Kraftfahrzeugs (1) ausgerichtete Fahrer-Richtcharakteristik (A1) bereitgestellt wird;
- eine Fahrer-Störschall-Richtcharakteristik (AS1) bereitzustellen, indem die Signale zweier Mikrofone zusammen verarbeitet werden;
- ein der Fahrer-Richtcharakteristik (A1) zugeordnetes Fahrer-Nutz-Signal in Abhängigkeit von einem der Fahrer-Störschall-Richtcharakteristik (AS1) zugeordneten Fahrer-Stör-Signal weiterzuverarbeiten;
und/oder
- die Signale des zweiten und des dritten Mikrofons (12, 13) derart zu verarbeiten, dass eine auf eine Position eines Beifahrerplatzes (8) des Kraftfahrzeugs (1) ausgerichtete Beifahrer-Richtcharakteristik (B1) bereitgestellt wird,
- eine Beifahrer-Störschall-Richtcharakteristik (BS1) bereitzustellen, indem die Signale zweier Mikrofone zusammen verarbeitet werden;
- ein der Beifahrer-Richtcharakteristik (B1) zugeordnetes Beifahrer-Nutz-Signal in Abhängigkeit von einem der Beifahrer-Störschall-Richtcharakteristik (BS1) zugeordneten Beifahrer-Stör-Signal weiterzuverarbeiten;
- für das Bereitstellen der Fahrer-Störschall-Richtcharakteristik (AS1) die Signale des zweiten und des ersten Mikrofons (12, 11) derart zu verarbeiten, dass die Fahrer-Störschall-Richtcharakteristik (AS1) ausgehend von dem Mikrofonsystem (2) eine zu einer Haupterstreckungsrichtung der Fahrer-Richtcharakteristik (A1) entgegengesetzt orientierte Haupterstreckungsrichtung aufweist, und/oder für das Bereitstellen der Beifahrer-Störschall-Richtcharakteristik (BS1) die Signale des dritten und des zweiten Mikrofons (13, 12) derart zu verarbeiten, dass die Beifahrer-Störschall-Richtcharakteristik (BS1) ausgehend von dem Mikrofonsystem (2) eine zu einer Haupterstreckungsrichtung der Beifahrer-Richtcharakteristik (B1) entgegengesetzt orientierte Haupterstreckungsrichtung aufweist.

2. Mikrofonsystem (2) nach Anspruch 1, wobei die drei Mikrofone (11, 12, 13) als Druckmikrofone ausgebildet sind, die eine Kugelcharakteristik (11', 12', 13') aufweisen.

3. Mikrofonsystem (2) nach einem der vorhergehenden Ansprüche, wobei die drei Mikrofone (11, 12, 13) in Form eines gleichschenkligen Dreiecks an jeweiligen Ecken des Dreiecks angeordnet sind, wobei das Dreieck bevorzugt ein stumpfwinkliges Dreieck ist, insbesondere mit einem Winkel von zumindest 100°.

4. Mikrofonsystem (2) nach einem der vorhergehenden Ansprüche, wobei die Signalverarbeitungseinrichtung (4) ausgebildet ist, in einem weiteren Betriebsmodus die Signale des ersten und des dritten Mikrofons (11, 13) derart zu verarbeiten, dass eine alternative Fahrer-Richtcharakteristik (A2) bereitgestellt wird, welche auf eine zweite Position des Fahrerplatzes (7) ausgerichtet ist, und eine entsprechende alternative Fahrer-Störschall-Richtcharakteristik (AS2) bereitzustellen, indem die Signale von den entsprechenden Mikrofonen zusammen verarbeitet werden, insbesondere die Signale des dritten und ersten Mikrofons für die alternative Fahrer-Störschall-Richtcharakteristik (AS2) und/oder in dem weiteren Betriebsmodus die Signale des zweiten und des dritten Mikrofons (12, 13) derart zu verarbeiten, dass eine alternative Beifahrer-Richtcharakteristik (B2) bereitgestellt wird, welche auf eine zweite Position des Beifahrerplatzes (8) ausgerichtet ist, und eine entsprechende alternative Beifahrer-Störschall-Richtcharakteristik (BS2) bereitzustellen, indem die Signale von den entsprechenden Mikrofonen zusammen verarbeitet werden, insbesondere die Signale des dritten und zweiten Mikrofons für die alternative Beifahrer-Störschall-Richtcharakteristik (BS2).

5. Mikrofonsystem (2) nach einem der vorhergehenden Ansprüche, wobei die Signalverarbeitungseinrichtung (4) ausgebildet ist, für das Bereitstellen der jeweiligen Störschall-Richtcharakteristik (AS1, BS1, AS2, BS2) das Signal eines der drei Mikrofone (11, 12, 13, 14) zusammen mit einem Mischsignal von zumindest zwei anderen Mikrofonen (11, 12, 13, 14) zu verarbeiten.

6. Mikrofonsystem (2) nach einem der vorhergehenden Ansprüche, wobei in dem Mikrofongehäuse (3) ein viertes Mikrofon (14) angeordnet ist, und die Signalverarbeitungseinrichtung (4) ausgebildet ist, in einem anderen Betriebsmodus die Signale des ersten und des vierten Mikrofons (11, 14) derart zu verarbeiten, dass eine andere alternative Fahrer-Richtcharakteristik (A3) bereitgestellt wird, welche auf eine dritte Position des Fahrerplatzes (7) ausgerichtet ist, wobei die zweite Position von dem Fahrerplatz (7) zwischen der ersten und der dritten Position des Fahrerplatzes (7) angeordnet ist und eine entsprechende andere alternative Fahrer-Störschall-Richtcharakteristik (AS3) bereitzustellen, indem die Signale von den entsprechenden Mikrofonen (11, 12, 13, 14) zusammen verarbeitet werden, insbesondere die Signale des vierten und ersten Mikrofons (14, 11) für die andere alternative Fahrer-Störschall-Richtcharakteristik (AS3), und/oder in dem anderen Betriebsmodus die Signale von dem vierten und dem dritten Mikrofon (11, 14) derart zu verarbeiten, dass eine andere alternative Beifahrer-Richtcharakteristik bereitgestellt wird, welche auf eine dritte Position des Beifahrerplatzes (8) ausgerichtet ist, wobei die zweite Position des Beifahrerplatzes (8) zwischen der ersten und der dritten Position des Beifahrerplatzes (8) angeordnet ist, und eine entsprechende andere alternative Beifahrer-Störschall-Richtcharakteristik (BS3) bereitzustellen, indem die Signale von den entsprechenden Mikrofonen (11, 12, 13, 14) zusammen verarbeitet werden, insbesondere die Signale des dritten und vierten Mikrofons (13, 14) für die andere alternative Beifahrer-Störschall-Richtcharakteristik (BS3).

7. Mikrofonsystem (2) nach Anspruch 6, wobei das erste Mikrofon (11), das dritte Mikrofon (13) und das vierte Mikrofon (14) in Form eines weiteren gleichschenkligen Dreiecks an jeweiligen Ecken des weiteren Dreiecks angeordnet sind, wobei das vierte Mikrofon (14) an der Spitze des Dreiecks angeordnet ist.

8. Kraftfahrzeug (1) mit einem Mikrofonsystem (2) nach einem der vorhergehenden Ansprüche.

9. Verfahren zum Betreiben eines Mikrofonsystems (2) eines Kraftfahrzeugs (1), wobei das Mikrofonsystem (2) ein Mikrofongehäuse (3) aufweist, in welchem ein erstes Mikrofon (11), ein zweites Mikrofon (12) und ein drittes Mikrofon (13) angeordnet sind, und eine Signalverarbeitungseinrichtung (4) aufweist, welche dazu ausgebildet ist, jeweilige von den Mikrofonen (11, 12, 13) bereitgestellte Signale zu verarbeiten und:
- die Signale des ersten und des zweiten Mikrofons (11, 12) derart zu verarbeiten, dass eine auf eine Position eines Fahrerplatzes (7) des Kraftfahrzeugs (1) ausgerichtete Fahrer-Richtcharakteristik (A1) bereitgestellt wird;
- wobei vorgesehen ist, dass ein Bereitstellen einer Fahrer-Störschall-Richtcharakteristik (AS1) erfolgt, indem jeweils die Signale zweier Mikrofone zusammen verarbeitet werden;
- und dass ein Weiterverarbeiten eines der Fahrer-Richtcharakteristik (A1) zugeordneten Fahrer-Nutz-Signals in Abhängigkeit von einem der Fahrer-Störschall-Richtcharakteristik (AS1) zugeordneten Fahrer-Stör-Signal erfolgt;
und/oder
- die Signale des zweiten und des dritten Mikrofons (12, 13) derart zu verarbeiten, dass eine auf eine Position eines Beifahrerplatzes (8) des Kraftfahrzeugs (1) ausgerichtete Beifahrer-Richtcharakteristik (B1) bereitgestellt wird;
- wobei vorgesehen ist, dass ein Bereitstellen einer Beifahrer-Störschall-Richtcharakteristik (BS1) erfolgt, indem jeweils die Signale zweier Mikrofone zusammen verarbeitet werden;
- und dass ein Weiterverarbeiten eines der Beifahrer-Richtcharakteristik (B1) zugeordneten Beifahrer-Nutz-Signals in Abhängigkeit von einem der Beifahrer-Störschall-Richtcharakteristik (BS1) zugeordneten Beifahrer-Stör-Signal erfolgt; und
- für das Bereitstellen der Fahrer-Störschall-Richtcharakteristik (AS1) die Signale des zweiten und des ersten Mikrofons (12, 11) derart verarbeitet werden, dass die Fahrer-Störschall-Richtcharakteristik (AS1) ausgehend von dem Mikrofonsystem (2) eine zu einer Haupterstreckungsrichtung der Fahrer-Richtcharakteristik (A1) entgegengesetzt orientierte Haupterstreckungsrichtung aufweist und/oder für das Bereitstellen der Beifahrer-Störschall-Richtcharakteristik (BS1) die Signale des dritten und des zweiten Mikrofons (13, 12) derart verarbeitet werden, dass die Beifahrer-Störschall-Richtcharakteristik (BS1) ausgehend von dem Mikrofonsystem (2) eine zu einer Haupterstreckungsrichtung der Beifahrer-Richtcharakteristik (B1) entgegengesetzt orientierte Haupterstreckungsrichtung aufweist.

## Claims

1. Microphone system (2) for a motor vehicle (1), comprising
a. a microphone housing (3), in which a first microphone (11), a second microphone (12) and a third microphone (13) are arranged;
b. a signal-processing device (4), which is designed to process respective signals provided by the microphones (11, 12, 13);
wherein the signal-processing device (4) is designed,
- to process the signals of the first and second microphones (11, 12) in such a way that a driver directivity pattern (A1) oriented toward the position of a driver seat (7) of the motor vehicle (1) is provided;
- to provide a driver interfering-noise directivity pattern (AS1) by processing the signals of two microphones together;
- to further process a driver useful signal associated with the driver directivity pattern (A1) in accordance with a driver interference signal associated with the driver interfering-noise directivity pattern (AS1);
and/or
- to process the signals of the second and the third microphone (12, 13) in such a way that a passenger directivity pattern (B1) oriented toward a position of a passenger seat (8) of the motor vehicle (1) is provided,
- to provide a passenger interfering-noise directivity pattern (BS1) by processing the signals of two microphones together;
- to further process a passenger useful signal associated with the passenger directivity pattern (B1) in accordance with a passenger interference signal associated with the passenger interfering-noise directivity pattern (BS1);
- to process the signals of the second and the first microphone (12, 11) for the provision of the driver interfering-noise directivity pattern (AS1) in such a way that the driver interfering-noise directivity pattern (AS1), starting from the microphone system (2), has a main extension direction oriented opposite to a main extension direction of the driver directivity pattern (A1), and/or to process the signals of the third and of the second microphone (13, 12) for the provision of the passenger interfering-noise directivity pattern (BS1) in such a way that the passenger interfering-noise directivity pattern (BS1), starting from the microphone system (2), has a main extension direction oriented opposite to a main extension direction of the passenger directivity pattern (B1).

2. Microphone system (2) according to claim 1,
wherein
the three microphones (11, 12, 13) are designed as pressure microphones, which have an omnidirectional pattern (11', 12', 13').

3. Microphone system (2) according to any one of the preceding claims,
wherein
the three microphones (11, 12, 13) are arranged in the form of an isosceles triangle at respective corners of the triangle, wherein the triangle is preferably an obtuse-angled triangle, in particular with an angle of at least 100°.

4. Microphone system (2) according to any one of the preceding claims,
wherein
the signal-processing device (4) is designed to process the signals of the first and of the third microphone (11, 13) in a further operating mode in such a way that an alternative driver directivity pattern (A2) is provided, which is oriented towards a second position of the driver seat (7), and to provide a corresponding alternative driver interfering-noise directivity pattern (AS2) by processing the signals of the corresponding microphones together, in particular to process the signals of the third and the first microphone for the alternative driver interfering-noise directivity pattern (AS2) and/or to process the signals of the second and the third microphone (12, 13) in the further operating mode in such a way that an alternative passenger directivity pattern (B2) is provided, which is oriented toward a second position of the passenger seat (8), and to provide a corresponding alternative passenger interfering-noise directivity pattern (BS2) by processing the signals of the corresponding microphones together, in particular the signals of the third and second microphone for the alternative passenger interfering-noise directivity pattern (BS2).

5. Microphone system (2) according to any one of the preceding claims,
wherein
the signal-processing device (4) is designed to process the signal of one of the three microphones (11, 12, 13, 14) together with a mixed signal of at least two other microphones (11, 12, 13, 14) for providing the respective interfering-noise directivity pattern (AS1, BS1, AS2, BS2).

6. Microphone system (2) according to any one of the preceding claims,
wherein
a fourth microphone (14) is arranged in the microphone housing (3) and the signal-processing device (4) is designed to process the signals of the first and the fourth microphone (11, 14) in another operating mode in such a way that another alternative driver directivity pattern (A3) is provided, which is oriented toward a third position of the driver seat (7), wherein the second position of the driver seat (7) is arranged between the first and the third position of the driver seat (7) and to provide a corresponding other alternative driver interfering-noise directivity pattern (AS3) by processing the signals of the corresponding microphones (11, 12, 13, 14) together, in particular the signals of the fourth and first microphone (14, 11) for the other alternative driver interfering-noise directivity pattern (AS3), and/or to process the signals of the fourth and the third microphone (11, 14) in the other operating mode in such a way that another alternative passenger directivity pattern is provided, which is oriented toward a third position of the passenger seat (8), wherein the second position of the passenger seat (8) is arranged between the first and the third position of the passenger seat (8), and to provide a corresponding other alternative passenger interfering-noise directivity pattern (BS3) by processing the signals of the corresponding microphones (11, 12, 13, 14) together, in particular the signals of the third and fourth microphone (13, 14) for the other alternative passenger interfering-noise directivity pattern (BS3).

7. Microphone system (2) according to claim 6,
wherein
the first microphone (11), the third microphone (13) and the fourth microphone (14) are arranged in the form of a further isosceles triangle at respective corners of the further triangle, wherein the fourth microphone (14) is arranged at the tip of the triangle.

8. Motor vehicle (1) having a microphone system (2) according to any one of the preceding claims.

9. Method for operating a microphone system (2) of a motor vehicle (1), wherein the microphone system (2) has a microphone housing (3), in which a first microphone (11), a second microphone (12) and a third microphone (13) are arranged, and has a signal-processing device (4), which is designed to process respective signals provided by the microphones (11, 12, 13) and:
- to process the signals of the first and second microphones (11, 12) in such a way that a driver directivity pattern (A1) oriented toward the position of a driver seat (7) of the motor vehicle (1) is provided;
- wherein it is provided that a provision of a driver interfering-noise directivity pattern (AS1) takes place by processing in each case the signals of two microphones together;
- and that a further processing of a driver useful signal associated with the driver directivity pattern (A1) takes place in accordance with a driver interference signal associated with the driver interfering-noise directivity pattern (AS1);
and/or
- to process the signals of the second and the third microphone (12, 13) in such a way that a passenger directivity pattern (B1) oriented toward a position of a passenger seat (8) of the motor vehicle (1) is provided,
- wherein it is provided, that a provision of a passenger interfering-noise directivity pattern (BS1) takes place by processing in each case the signals of two microphones together;
- and that a further processing of a passenger useful signal associated with the passenger directivity pattern (B1) takes place in accordance with a passenger interference signal associated with the passenger interfering-noise directivity pattern (BS1); and
- the signals of the second and the first microphone (12, 11) are processed for the provision of the driver interfering-noise directivity pattern (AS1) in such a way that the driver interfering-noise directivity pattern (AS1), starting from the microphone system (2), has a main extension direction oriented opposite to a main extension direction of the driver directivity pattern (A1), and/or the signals of the third and of the second microphone (13, 12) are processed for the provision of the passenger interfering-noise directivity pattern (BS1) in such a way that the passenger interfering-noise directivity pattern (BS1), starting from the microphone system (2), has a main extension direction oriented opposite to a main extension direction of the passenger directivity pattern (B1).

## Revendications

1. Système de microphone (2) pour un véhicule automobile (1), avec
a. un boîtier de microphone (3) dans lequel sont disposés un premier microphone (11), un deuxième microphone (12) et un troisième microphone (13) ;
b. un dispositif de traitement de signal (4) configuré pour traiter les signaux respectifs fournis par les microphones (11, 12, 13) ;
le dispositif de traitement de signal (4) étant configuré
- pour traiter les signaux du premier et du deuxième microphone (11, 12) de sorte à fournir une caractéristique directionnelle du conducteur (A1) orientée vers une position d'un siège conducteur (7) du véhicule automobile (1) ;
- pour fournir une caractéristique directionnelle de bruit du conducteur (AS1) en traitant les signaux de deux microphones ensemble ;
- pour traiter ultérieurement un signal utile au conducteur affecté à la caractéristique directionnelle du conducteur (A1) en fonction d'un signal de perturbation du conducteur affecté à la caractéristique directionnelle de bruit du conducteur (AS1) ;
et/ou
- pour traiter les signaux du deuxième et du troisième microphone (12, 13) de sorte à fournir une caractéristique directionnelle du passager (B1) orientée vers une position d'un siège passager (8) du véhicule automobile (1),
- pour fournir une caractéristique directionnelle de bruit du passager (BS1) en traitant les signaux de deux microphones ensemble ;
- pour traiter ultérieurement un signal utile au passager affecté à la caractéristique directionnelle du passager (B1) en fonction d'un signal de perturbation du passager affecté à la caractéristique directionnelle de bruit du passager (BS1) ;
- pour traiter les signaux du deuxième et du premier microphone (12, 11) pour fournir la caractéristique directionnelle de bruit du conducteur (AS1) de sorte que la caractéristique directionnelle de bruit du conducteur (AS1), à partir du système de microphone (2), ait une direction d'extension principale orientée à l'opposé d'une direction d'extension principale de la caractéristique directionnelle du conducteur (A1), et/ou pour traiter les signaux du troisième et du deuxième microphone (13, 12) pour fournir la caractéristique directionnelle de bruit du passager (BS1) de sorte que la caractéristique directionnelle de bruit du passager (BS1), à partir du système de microphone (2), ait une direction d'extension principale orientée à l'opposé d'une direction d'extension principale de la caractéristique directionnelle du passager (B1).

2. Système de microphone (2) selon la revendication 1, dans lequel les trois microphones (11, 12, 13) sont conçus comme des microphones à pression qui ont une caractéristique omnidirectionnelle (11', 12', 13').

3. Système de microphone (2) selon l'une quelconque des revendications précédentes, dans lequel les trois microphones (11, 12, 13) sont disposés en forme de triangle isocèle aux coins respectifs du triangle, le triangle étant de préférence un triangle obtus, en particulier avec un angle d'au moins 100°.

4. Système de microphone (2) selon l'une quelconque des revendications précédentes, dans lequel le dispositif de traitement de signal (4) est configuré pour traiter dans un autre mode de fonctionnement les signaux provenant du premier et du troisième microphone (11, 13) de sorte à fournir une caractéristique directionnelle du conducteur alternative (A2) orientée vers une deuxième position du siège conducteur (7), et pour fournir une caractéristique directionnelle de bruit du conducteur alternative (AS2) correspondante en traitant ensemble les signaux provenant des microphones respectifs, en particulier pour traiter les signaux du troisième et du premier microphone pour la caractéristique directionnelle de bruit du conducteur alternative (AS2) et/ou, dans l'autre mode de fonctionnement, pour traiter les signaux du deuxième et du troisième microphone (12, 13) de sorte à fournir une caractéristique directionnelle du passager alternative (B2), qui est orientée vers une deuxième position du siège passager (8), et pour fournir une caractéristique directionnelle de bruit du passager alternative (BS2) respective en traitant ensemble les signaux des microphones respectifs, en particulier les signaux du troisième et du deuxième microphone pour la caractéristique directionnelle du passager alternative (BS2).

5. Système de microphone (2) selon l'une quelconque des revendications précédentes, dans lequel le dispositif de traitement de signal (4) est configuré pour traiter le signal de l'un des trois microphones (11, 12, 13, 14) avec un signal mélangé provenant d'au moins deux autres microphones (11, 12, 13, 14) pour fournir la caractéristique directionnelle de bruit (AS1, BS1, AS2, BS2) respective.

6. Système de microphone (2) selon l'une quelconque des revendications précédentes, dans lequel un quatrième microphone (14) est disposé dans le boîtier de microphone (3), et le dispositif de traitement de signal (4) est configuré pour traiter les signaux du premier et du quatrième microphone (11, 14) dans un autre mode de fonctionnement de sorte à fournir une autre caractéristique directionnelle du conducteur alternative (A3), qui est orientée vers une troisième position du siège conducteur (7), la deuxième position du siège conducteur (7) étant disposée entre la première et la troisième position du siège conducteur (7) et fournit une autre caractéristique directionnelle de bruit du conducteur alternative (AS3) correspondante en traitant ensemble les signaux provenant des microphones (11, 12, 13, 14) correspondants, en particulier les signaux provenant du quatrième et du premier microphone (14, 11) pour l'autre caractéristique directionnelle de bruit du conducteur alternative (AS3), et/ou dans l'autre mode de fonctionnement, pour traiter les signaux du quatrième et du troisième microphone (11, 14) de sorte à fournir une autre caractéristique directionnelle du passager alternative, qui est orientée vers une troisième position du siège passager (8), dans lequel la deuxième position du siège passager (8) est disposée entre la première et la troisième position du siège passager (8), et pour fournir une autre caractéristique directionnelle de bruit du passager alternative (BS3) en traitant ensemble les signaux des microphones (11, 12, 13, 14) correspondants, en particulier les signaux du troisième et du quatrième microphone (13, 14) pour l'autre caractéristique directionnelle de bruit du passager alternative (BS3).

7. Système de microphone (2) selon la revendication 6, dans lequel le premier microphone (11), le troisième microphone (13) et le quatrième microphone (14) sont disposés sous la forme d'un autre triangle isocèle aux coins respectifs de l'autre triangle, le quatrième microphone (14) étant disposé au sommet du triangle.

8. Véhicule automobile (1) avec un système de microphone (2) selon l'une quelconque des revendications précédentes.

9. Procédé de fonctionnement d'un système de microphone (2) d'un véhicule automobile (1), le système de microphone (2) présentant un boîtier de microphone (3) dans lequel sont disposés un premier microphone (11), un deuxième microphone (12) et un troisième microphone (13), et présentant un dispositif de traitement de signal (4) qui est configuré pour traiter les signaux respectifs fournis par les microphones (11, 12, 13) et :
- pour traiter les signaux du premier et du deuxième microphone (11, 12) de sorte à fournir une caractéristique directionnelle du conducteur (A1) orientée vers une position d'un siège conducteur (7) du véhicule automobile (1) ;
- une caractéristique directionnelle de bruit du conducteur (AS1) étant fournie par les signaux de deux microphones traités ensemble dans chaque cas ;
- et un signal utile au conducteur affecté à la caractéristique directionnelle du conducteur (A1) est traité ultérieurement en fonction d'un signal de perturbation du conducteur affecté à la caractéristique directionnelle de bruit du conducteur (AS1) ;
et/ou
- pour traiter les signaux du deuxième et du troisième microphone (12, 13) de sorte à fournir une caractéristique directionnelle du passager (B1) orientée vers une position d'un siège passager (8) du véhicule automobile (1) ;
- une caractéristique directionnelle de bruit du passager (BS1) étant fournie en traitant les signaux de deux microphones ensemble ;
- et un signal utile au passager affecté à la caractéristique directionnelle du passager (B1) est traité ultérieurement en fonction d'un signal de perturbation du passager affecté à la caractéristique directionnelle de bruit du passager (BS1) ; et
- pour traiter les signaux du deuxième et du premier microphone (12, 11) pour fournir la caractéristique directionnelle de bruit du conducteur (AS1) de sorte que la caractéristique directionnelle de bruit du conducteur (AS1), à partir du système de microphone (2), ait une direction d'extension principale orientée à l'opposé d'une direction d'extension principale de la caractéristique directionnelle du conducteur (A1), et/ou pour traiter les signaux du troisième et du deuxième microphone (13, 12) pour fournir la caractéristique directionnelle de bruit du passager (BS1) de sorte que la caractéristique directionnelle de bruit du passager (BS1), à partir du système de microphone (2), ait une direction d'extension principale orientée à l'opposé d'une direction d'extension principale de la caractéristique directionnelle du passager (B1).
